# EUROPÄISCHE PATENTANMELDUNG

(11) **EP 1 475 142 A1**
(43) Veröffentlichungstag der Anmeldung: **10.11.2004**
(21) Anmeldenummer: 03405326.4
(22) Anmeldetag: 09.05.2003
(51) Int. Cl.: B01D 63/08, B01D 65/00, B01D 61/18, C02F 1/44

(54) **Membranplatte und Filtereinheit**

(71) Anmelder: Utisol Technologies AG, 6304 Zug (CH)
(72) Erfinder:
(74) Vertreter: Frei, Alexandra Sarah

(57) **Zusammenfassung**

Eine Filtereinheit (10) weist parallel aneinander gelegte Membranplatten (1) auf, die zumindest in Bereichen (4) um Anschlusselemente (2) zur Ableitung von Permeat, d.h. gefilterter Flüssigkeit, flüssigkeitsdicht miteinander verbunden sind. Die Membranplatten (1) sind dazu derart geformt, dass nach dem Aufeinanderlegen zweier Membranplatten (1) eine solche flüssigkeitsdichte Verbindung herstellbar ist.

Dadurch wird verhindert, dass ungefilterte Flüssigkeit zwischen den Membranplatten (1) hindurch fliesst und das Permeat in einem um die Anschlusselemente (2) gelegenen Volumen verunreinigt.

In einer bevorzugten Ausführungsform der Erfindung liegt eine vorerst formschlüssige Verbindung vor, aus welcher, beispielsweise durch Schweissen, eine stoffschlüssige Verbindung gebildet wird.

Über mehrere Anschlusselemente (2) und dazwischen liegenden Bereichen (4) kann ein Hohlprofil (11) angebracht werden, das an seinen Enden abgeschlossen ist. Dieses umschliesst Austrittsöffnungen der Anschlusselemente (2) und die dazwischen liegenden Bereiche flüssigkeitsdicht, vorzugsweise stoffschlüssig. Dadurch wird ein Permeatsammelkanal (11) gebildet, aus dem sich über einen Permeatabzug (13) das Permeat absaugen lässt.

## Beschreibung

Die Erfindung bezieht sich auf das Gebiet der Filtertechnik, insbesondere auf eine Membranplatte und eine Filtereinheit gemäss dem Oberbegriff der Patentansprüche 1 und 8, und auf ein Verfahren zur Herstellung einer Filtereinheit gemäss dem Oberbegriff des Patentanspruches 15.

### STAND DER TECHNIK

In Filtereinrichtungen, insbesondere in Aufbereitungsanlagen für Abwasser oder Trinkwasser werden Filtereinheiten eingesetzt, die typischerweise mit Membranfiltern bestückt sind. Eine Vielzahl von Membranfiltern ist dabei in einer rechteckförmigen Aufhängung angeordnet und wird in die zu filternde Flüssigkeit eingetaucht betrieben. Jedes Membranfilter weist eine Stützplatte mit zwei Filtermembranen auf. In Hohlräumen oder Leitungen innerhalb des Membranfilters sammelt sich Permeat, d.h. gefilterte Flüssigkeit, an. Die einzelnen Membranfilter sind jeweils über einzelne Anschlüsse, beispielsweise Rohre oder Schläuche, mit einer Permeatsammelleitung verbunden, die das Permeat aus den Membranfiltern absaugt. Bei einem Aufbau der Anlage werden die Membranfilter einzeln eingebaut und an die Permeatsammelleitung angeschlossen. Bei einer Revision oder einer Reinigung werden sie einzeln abgehängt. Diese Vorgehen ist umständlich und zeitaufwendig und erhöht Herstellungs- und Montagekosten der Anlage.

Die EP-A-1 016 449 zeigt, wie eine Mehrzahl von parallel angeordnetem Filtertaschen in ein Becken mit flüssigem Giessharz eingesetzt werden. Nach dem Aushärten des Giessharzes werden Durchbrechungen zu den Filtertaschen in das Giessharz gefräst. Gemäss einer bestimmten Ausführungsform weisen die Filtertaschen entlang zweier Kanten Steckvorsprünge und -Ausnehmungen auf. Damit können sie durch Zusammenstecken zu einem Paket verbunden werden. Das Herstellungsverfahren ist auch hier aufwendig.

### DARSTELLUNG DER ERFINDUNG

Es ist deshalb Aufgabe der Erfindung, eine Membranplatte und eine Filtereinheit der eingangs genannten Art zu schaffen, welche Nachteile des Standes der Technik beheben, und insbesondere eine einfache und kostengünstige Konstruktion einer Filtereinheit erlauben.

Diese Aufgabe lösen eine Membranplatte und eine Filtereinheit mit den Merkmalen der Patentansprüche 1 und 8, sowie ein Verfahren zur Herstellung einer Filtereinheit mit den Merkmalen des Patentanspruches 15.

In der erfindungsgemässen Filtereinheit sind also mindestens zwei erfindungsgemässe Membranplatten parallel aneinander gelegt und zumindest in Bereichen um Anschlusselemente zur Ableitung von Permeat flüssigkeitsdicht miteinander verbunden. Die Membranplatten sind dazu derart geformt, dass nach dem Aufeinanderlegen zweier Membranplatten eine solche flüssigkeitsdichte Verbindung respektive Abdichtung durch Verschweissen herstellbar ist.

Dadurch wird verhindert, dass ungefilterte Flüssigkeit zwischen den Membranplatten hindurch fliesst und das Permeat in einem um die Anschlusselemente gelegenen Volumen verunreinigt. Es liegt vorzugsweise nur eine Abdichtung zwischen dem Membranplatten im Bereich der Anschlusselemente vor. Ein Anschlusselement kann auch aus mehreren Durchbrechungen einer Kante bestehen. Ein Anschlusselement respektive die mehreren Durchbrechungen beanspruchen dabei aber nur einen vergleichsweise kleinen Bereich einer Längskante, beispielsweise weniger als ein Fünftel oder als ein Zehntel der Längskante. Dadurch werden der Aufwand zum Herstellen der Abdichtung und die Zuverlässigkeit der Abdichtung erhöht.

Diese Abdichtung wird beispielsweise durch eine formschlüssige und dabei flüssigkeitsdichte Verbindung zwischen den mindestens zwei Membranplatten erzielt, beispielsweise durch eine wasserdichte Steck- oder Schnappverbindung eines Dichtungsprofils. In einer anderen, bevorzugten Ausführungsform der Erfindung liegt eine vorerst formschlüssige Verbindung vor, aus welcher eine stoffschlüssige Verbindung gebildet wird. Dies geschieht, je nach Material der Membranplatten, durch Kleben, Schweissen oder Löten, wonach die Membranplatten in der Regel nicht mehr ohne Schädigung lösbar verbunden sind. Vorzugsweise ist das Material ein thermoplastischer Kunststoff, und es werden die Membranplatten im Bereich zwischen den Anschlusselementen miteinander verschweisst respektive verschmolzen.

Über mehrere Anschlusselemente und dazwischen liegenden Bereichen kann ein Hohlprofil angebracht werden, das an seinen Enden abgeschlossen ist. Dieses umschliesst Austrittsöffnungen der Anschlusselemente und die dazwischen liegenden Bereiche flüssigkeitsdicht, vorzugsweise stoffschlüssig. Dadurch wird ein Permeatsammelkanal gebildet, aus dem sich über einen Permeatabzug das Permeat absaugen lässt.

Vorzugsweise sind die erwähnten Verbindungsstellen zwischen Membranplatten untereinander und zwischen Membranplatten und Permeatsammelkanal durch ebene Flächen gebildet, was eine einfache Herstellung erlaubt. Verbindungsstellen zwischen einzelnen Membranplatten können auch durch Nut-Feder-Verbindungen gebildet werden, die beispielsweise kraftschlüssig einschnappen, sich verkeilen oder miteinander verschweissbar sind. Um, je nach zu filterndem Medium und Art von Verunreinigungen, einen Abstand zwischen Membranplatten zu erhöhen, sind Distanzelemente oder Abstandshalter an einzelnen Stellen, beispielsweise zwischen Längskanten der Membranplatten einlegbar. Diese werden wie die Membranplatten verbunden, also beispielsweise gesteckt und/oder geschweisst.

Zusammengefasst kann aus einer Anzahl von identischen erfindungsgemässen Membranplatten lediglich durch Verschweissen der Schweissbereiche zur Abdichtung, Aufschweissen des Permeatsammelkanals und einiger Schweissraupen zur Verbindung der Membranplatten ein komplettes einsatzbereites Filtermodul hergestellt werden. Durch die Abstandselemente sind in einfacher Weise Anpassungen an unterschiedliche Flüssigkeitseigenschaften möglich.

Durch die sehr einfache und kostengünstige Herstellung einer Filtereinheit entfällt die Notwendigkeit aufwendiger Revisionen, es kann einfach eine Filtereinheit als Ganzes ersetzt werden. Die erfindungsgemässe Filtereinheit eignet sich aufgrund der kostengünstigen und kompakten Bauweise insbesondere für Hauskläranlagen und Wasserfiltration.

Mit dem Begriff "Wasser" oder "Schmutzwasser" wird in der vorliegenden Anmeldung jeweils Abwasser oder aufzubereitendes Trinkwasser bezeichnet. Die Erfindung ist aber auch auf Filtereinheiten für andere Flüssigkeiten anwendbar.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

### KURZE BESCHREIBUNG DER ZEICHNUNGEN

Im folgenden wird der Erfindungsgegenstand anhand bevorzugter Ausführungsbeispiele, welches in den beiliegenden Zeichnungen dargestellt sind, näher erläutert. Es zeigen:
- Figuren 1 bis 3: verschiedene Ansichten einer Filtereinheit gemäss der Erfindung;
- Figur 4: schematisch eine perspektivische Ansicht eines Teiles einer Filtereinheit mit mehreren Membranplatten; und
- Figuren 5 bis 7: schematisch verschiedene Ansichten auf aneinander gelegte Membranplatten im Bereich von Permeatausströmschächten.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

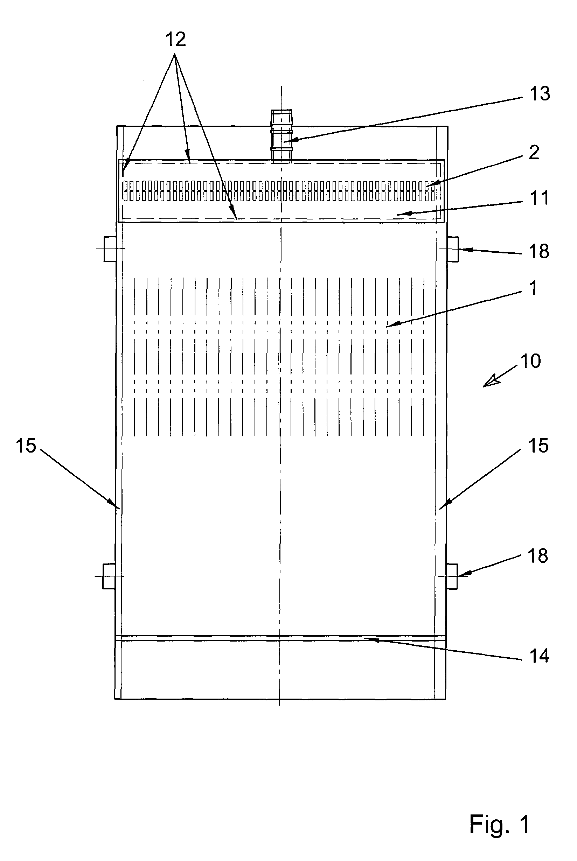

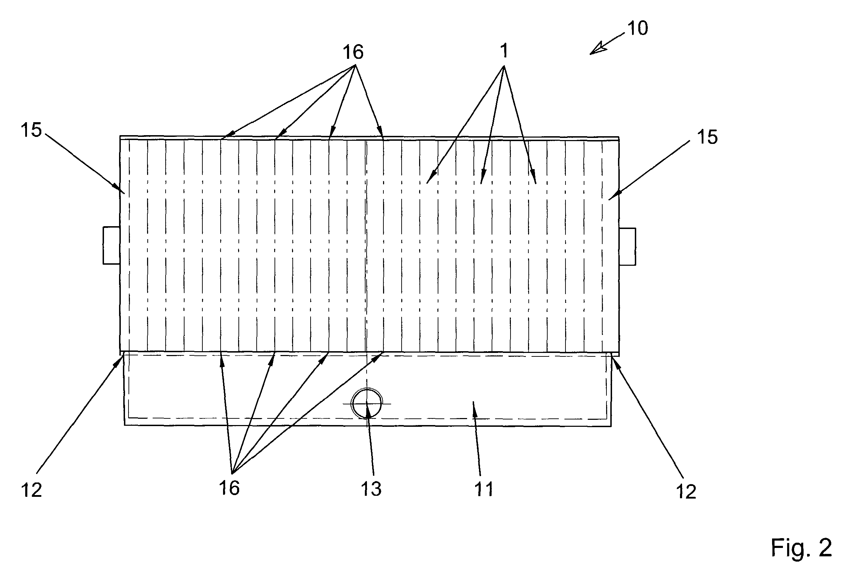

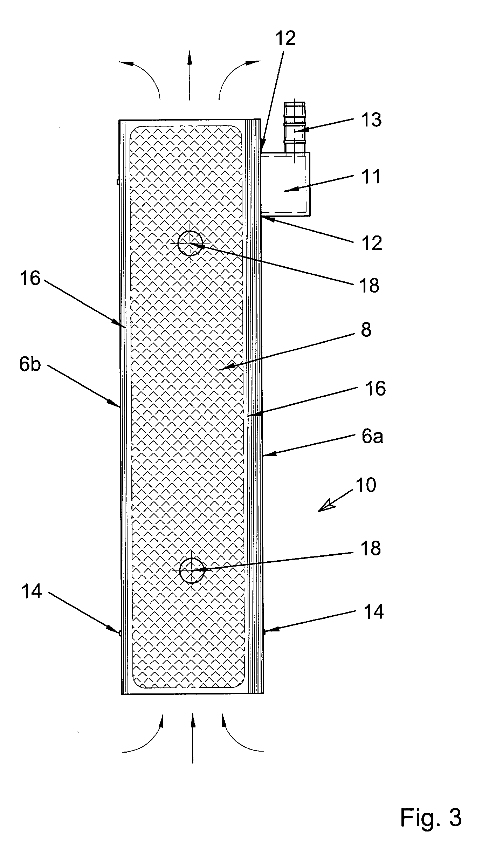

Figuren 1 zeigt eine Seitenansicht, Figur 2 eine Aufsicht und Figur 3 einen Querschnitt durch eine Filtereinheit 10 gemäss der Erfindung. Die gezeichnete Stellung entspricht einer Betriebsstellung der Filtereinheit 10, in welcher sie in einer zu filternden Flüssigkeit eingetaucht betrieben und von der Flüssigkeit von unten nach oben durchströmt wird. Eine entsprechende Strömungsrichtung ist durch Pfeile angedeutet. Die Filtereinheit 10 wird hauptsächlich durch eine Mehrzahl von parallel und einander deckend respektive kongruent aneinandergelegten Membranplatten 1 gebildet. Ein solcher Stapel von Membranplatten 1 kann an zwei Seiten durch Deckplatten 15 abgeschlossen sein. Die Deckplatten 15 weisen Abstandsnoppen 18 zur Beabstandung von weiteren Filtereinheiten 10 auf. In einem Bereich einer ersten Längskante 6a und einer zweiten Längskante 6b sind aneinanderliegende Membranplatten 1 jeweils formschlüssig miteinander verbunden, beispielsweise durch ineinanderpassende Nut-Feder-Verbindungen 16. Diese Verbindungen müssen nicht zwingend flüssigkeitsdicht sein. Es genügt, wenn die aufwärts strömende und gegebenenfalls mit Spülluft vermischte Flüssigkeit im Wesentlichen nicht seitlich durch die Längskanten 6a,6b entweicht. Bei der beschriebenen Orientierung der Durchströmung sind die Membranplatten 1 entlang den kürzeren Kanten nicht miteinander verbunden.

Die Membranplatten 1 sind vorzugsweise einstückig aus einem thermoplastischen Material, beispielsweise aus Polypropylen, ABS, etc... geformt. An einer oder mehreren Stellen sind die Membranplatten 1 ferner durch senkrecht zu den ersten Längskanten 6a respektive den zweiten Längskanten 6b verlaufende Schweissraupen 14 miteinander verschweisst.

Hier und im Folgenden werden stoffschlüssige Verbindungen beschrieben, die durch Schweissen von thermoplastischem Material gebildet werden. Es ist jedoch auch möglich, die Verbindungen jeweils durch Kleben oder, in einzelnen Fällen, durch flüssigkeitsdichte Steckverbindungen herzustellen. Bei Verwendung anderer Materialien für die Membranplatten 1 können Verbindungen auch gelötet sein.

In einem Bereich der ersten Längskante 6a weist jede Membranplatte 1 einen Permeatausströmschacht 2 auf. Dieser führt von einer Innenseite der Membranplatte 1 zu einer in einer Fläche der ersten Längskante 6a gelegenen Austrittsöffnung. Die Austrittsöffnungen aller Membranplatten 1 sind durch einen Permeatsammelkanal 11 mit einer Leitung zum Permeatabzug 13 umschlossen. Der Permeatsammelkanal 11 und die Membranplatten 1 sind entlang einer Schweisskante des Permeatsammelkanals 12 verschweisst. Um den Permeatsammelkanal 11 gegenüber der in der Filtereinheit 10 strömenden Flüssigkeit abzudichten, sind Bereiche der Membranplatten 1 zwischen den Permeatausströmschächten 2 respektive deren Austrittsöffnungen ebenfalls miteinander verschweisst.

Der Permeatsammelkanal 11 kann einen (nicht gezeichneten) zweiten Anschlussstutzen aufweisen, der dem Permeatabzug 13 gegenüberliegt und über eine durchbrechbare Stelle mit der Innenseite des Permeatsammelkanals 11 verbindbar ist. Dadurch können zwei Filtereinheiten 10 aufeinander gestellt und durch einen Schlauch miteinander verbunden betrieben werden.

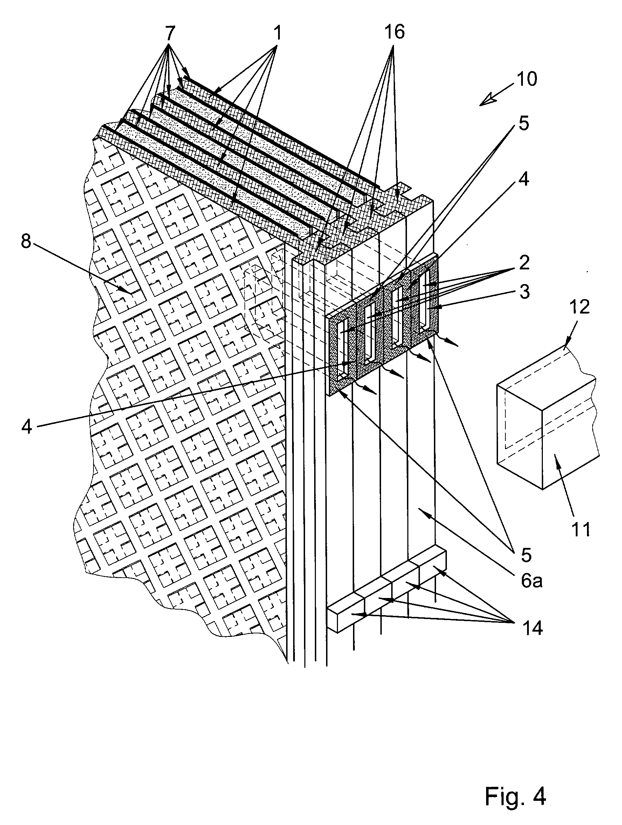

Figur 4 zeigt schematisch eine perspektivische Ansicht eines Teiles einer Filtereinheit mit mehreren Membranplatten im Bereich der Permeatausströmschächte 2. Eine Membranplatte 1 weist zwei Filtermembranen 7 auf, die beiderseits einer Stützplatte 8 angeordnet sind. Ein Permeatausströmschacht 2 einer Membranplatte 1 führt von einem zwischen den Filtermembranen 7 gelegenen Volumen zur ersten Längskante 6a der Membranplatte 1. Der Schacht ist vorzugsweise als rechteckiger Kanal im wesentlichen senkrecht zur ersten Längskante 6a ausgeführt. Der Permeatausströmschacht 5 kann auch rund oder oval geformt sein. Ein Bereich um die Austrittsöffnung des Permeatausströmschachts 2 ist vorzugsweise eben geformt. Dieser Bereich bildet an den zwei Längskanten des Permeatausströmschachts 2 Schweissbereiche zur Abdichtung 4 und an den kurzen Kanten des Permeatausströmschachts 2 Schweissbereiche für den Permeatsammelkanal 5.

Beim Herstellen der Filtereinheit 10 kommt beim Aneinanderlegen mehrerer Membranplatten 1 jeweils ein Schweissbereich zur Abdichtung 4 einer erstem Membranplatte 1 an einen Schweissbereich zur Abdichtung 4 einer zweiten Membranplatte 1 zu liegen. Diese Schweissbereiche aller Membranplatten 1 werden durch Spiegelschweissen in einem einzigen Arbeitsgang jeweils paarweise miteinander verschmolzen. Der verwendete Schweissspiegel weist dazu eine Länge auf, die einer Breite der Filtereinheit 10 entspricht, und eine Höhe, die einer Höhe der Austrittsöffnungen entspricht. Zwischen den Permeatausströmschächten 2 bilden sich dadurch Wülste aus verschmolzenem Material, welche ein stoffschlüssige und flüssigkeitsdichte Verbindung gegenüber einem zwischen den Membranplatten 1 liegenden Bereich respektive Volumen ungefilterter Flüssigkeit bilden.

In einem weiteren Arbeitsgang wird der Permeatsammelkanal 11 entlang der Schweisskante des Permeatsammelkanals 12 auf Schweissbereiche für den Permeatsammelkanal 5 der Membranplatten 1 geschweisst. Dazu bilden die aneinandergelegten und ebenen Schweissbereiche für den Permeatsammelkanal 5 eine im wesentlichen ebene Fläche, so dass die Schweisskante des Permeatsammelkanals 12 gerade ausgeführt werden kann. Die Schweissbereiche für Permeatsammelkanal 5 müssen nicht zwingend eben ausgeformt sein. Sie können beispielsweise auch gewellt sein, wobei dann auch die Schweisskante des Permeatsammelkanals 12 entsprechend gewellt sein muss. Aus Gründen der einfachen Herstellung wird die ebene Form bevorzugt.

Vorzugsweise werden, um eine völlig dichte Verbindung zwischen den Membranplatten 1 im Bereich des Schweissbereichs für den Permeatsammelkanal 5 zu erreichen, diese Bereiche vor dem Aufschweissen des Permeatsammelkanals 11 in einem separaten Arbeitsgang miteinander verschweisst. Dabei werden die Schweissbereiche für den Permeatsammelkanal 5 im schmelzfähigen Zustand mit einem Druckstempel flächig zusammengedrückt. Der Druckstempel drückt dabei auch auf Schweissbereiche der Deckplatten 15, die an die Schweissbereiche zur Abdichtung 4 der äusseren Membranplatten 1 anliegen. Die Form des Druckstempels entspricht also ungefähr der Form der Schweisskante des Permeatsammelkanals 12.

In der Figur 4 ist der ebene Bereich 4,5 um die Austrittsöffnungen als erhaben gegenüber dem restlichen Bereich der ersten Längskante 6a dargestellt. Die Erhöhung dieser Schweissbereiche 4,5 beträgt beispielsweise 1 bis 2 mm. Er kann aber auch nicht erhaben sein, wobei aber ausreichend Material zwischen den Schweissstellen und der Feder-Nut-Verbindung vorhanden sein muss, um eine saubere Schweissung zu gewährleisten. In der Figur 4 ebenfalls dargestellt sind Erhebungen zur Bildung einer Schweissraupe 14. Die Schweissraupe wird durch Erhitzen des Kunststoffs und Andrücken eines langgestreckten Formstempels erzeugt.

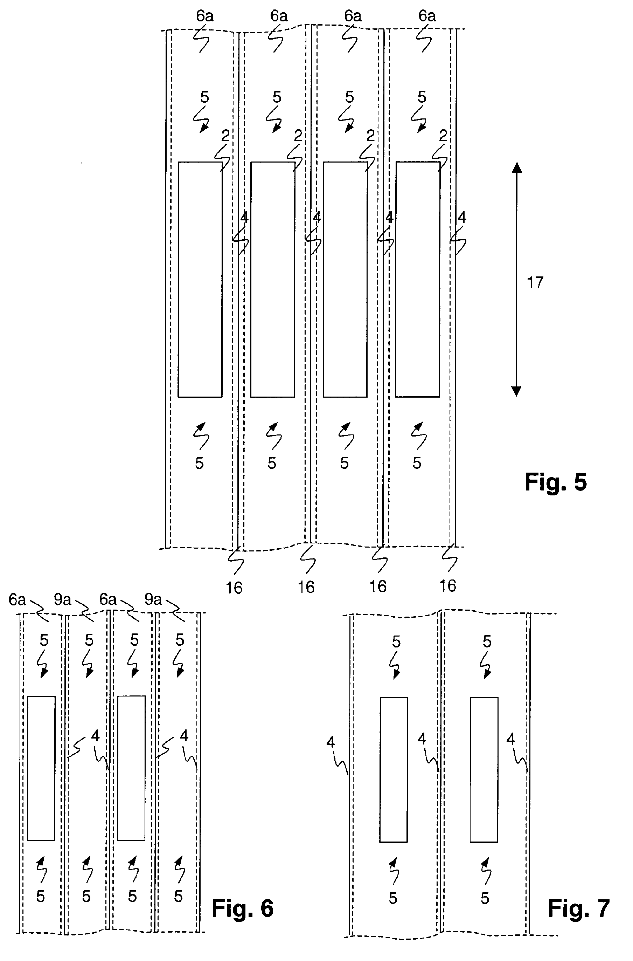

Figuren 5 bis 7 zeigen schematisch Ansichten auf aneinander gelegte Membranplatten 1 im Bereich der Permeatausströmschächte 2 in verschiedenen Ausführungsformen der Erfindung. Im Gegensatz zur Figur 4 sind die Schweissbereiche 4,5 nicht erhaben respektive überhöht dargestellt. Figur 5 entspricht einer Anordnung wie in Figur 4. Eine vertikale Ausdehnung der Verbindungsbereiche, in welchen beim Spiegelschweissen die Schweissbereiche zur Abdichtung 4 miteinander verschweisst werden, ist mit der Bezugsziffer 17 bezeichnet.

In Figur 6 wird ein grösserer Abstand zwischen den Membranplatten 1 durch zwischen den Membranplatten 1 im Bereich der ersten Längskanten 6a eingelegte erste Abstandshalter 9a erzielt. Analog werden nicht gezeichnete zweite Abstandshalter 9b zwischen die Membranplatten 1 im Bereich der zweiten Längskanten 6b eingelegt. In Figur 7 wird gezeigt, wie ein einer alternativen Ausführungsform der Erfindung ein grösserer Abstand zwischen Membranplatten 1 durch Verbreiterung der Längskanten 6a,6b erreichbar ist.

Falls auf eine Deckplatte 15 verzichtet wird, kann die Schweisskante des Permeatsammelkanals 12 zur Verbesserung der mechanischen Stabilität und der Qualität der Schweissverbindung respektive Schmelznaht im Randbereich mit einer in Richtung der Membranplatte 1 vorstehende Lippe versehen sein, die beim Aufsetzen auf einen Stapel von Membranplatten 1 jeweils einen Rand der erste Längskante 6a der beiden äusseren Membranplatten 1 umfasst.

Beispielhafte Masse für die Grösse einer Membranplatte 1 und damit auch der Filtereinheit 10 sind eine Länge von 30 bis 60 cm und eine Breite von 5 bis 20 cm. Eine Dicke der Filtereinheit 10 kann 20 bis 50 cm oder mehr betragen und zehn, zwanzig oder mehr Membranplatten 1 aufweisen. Entsprechend werden Filterflächen von mehreren Quadratmetern realisiert. Bei einer Dicke einer Membranplatte 1 von 5 mm ist eine Austrittsöffnung ca. 2 mm breit und 15 bis 20 mm hoch. Eine Dicke eines Steges eines Schweissbereichs zur Abdichtung 4 beträgt dann ca. 1 bis 1.5 mm. der Schweissbereich für den Permeatsammelkanal 5 erstreckt sich von der Austrittsöffnung aus um einen halben bis über einen Zentimeter entlang der ersten Längskante 6a. Die angegebenen Masse sind beispielhaft zu verstehen, innerhalb physikalisch sinnvoller Grenzen lassen sich die Masse im wesentlichen beliebig variieren, ohne dass der Bereich der Erfindung verlassen wird.

### BEZUGSZEICHENLISTE

- 1: Membranplatte
- 2: Permeatausströmschacht
- 3: Schachtrand
- 4: Schweissbereich zur Abdichtung
- 5: Schweissbereich für Permeatsammelkanal
- 6a: erste Längskante
- 6b: zweite Längskante
- 7: Filtermembran
- 8: Stützplatte
- 9a: erster Abstandshalter
- 9b: zweiter Abstandshalter
- 10: Filtereinheit
- 11: Permeatsammelkanal
- 12: Schweisskante des Permeatsammelkanals
- 13: Permeatabzug
- 14: Erhebung zur Bildung einer Schweissraupe
- 15: Deckplatte
- 16: Nut-Feder-Verbindung
- 17: Bereich für Spiegelschweissung zu Abdichtung
- 18: Abstandsnoppen

## Patentansprüche

1. Membranplatte (1) zur Stützung von Filtermembranen (7), insbesondere für ein Wasserfilter einer Wasseraufbereitungs- oder Abwasserreinigungsanlage, aufweisend ein Anschlusselement (2) zum Abführen von in der Membranplatte (1) gesammelten Permeat, **dadurch gekennzeichnet,**
**dass** mindestens zwei gleich geformte Membranplatten (1) parallel zueinander anordenbar sind, und eine flüssigkeitsdichte Verbindung der Membranplatten (1) in einem Bereich zwischen den Anschlusselementen (2) der mindestens zwei derart angeordneten Membranplatten (1) durch Verschweissen herstellbar ist.

2. Membranplatte (1) nach Anspruch 1, **dadurch gekennzeichnet, dass** durch die parallele Anordnung der mindestens zwei Membranplatten (1) eine formschlüssige Verbindung zwischen den mindestens zwei Membranplatten (1) im Bereich zwischen den Anschlusselementen (2) bildbar ist, insbesondere durch Nut-Feder-Verbindungselemente (16), die an einer ersten Längskante (6a) und einer zweiten Längskante (6b) der Membranplatte (1) angeordnet sind.

3. Membranplatte (1) nach einem der Ansprüche 1 bis 2, wobei das Anschlusselement (2) ein in einer ersten Längskante (6a) der Membranplatte (1) geformter Schacht ist.

4. Membranplatte (1) nach Anspruch 3, wobei eine Umrandung des Schachts (2) beim Austritt aus der ersten Längskante (6a) durch eine ebene Fläche gebildet wird.

5. Membranplatte (1) nach Anspruch 4, wobei erste Bereiche der Umrandung des Schachts (2) Verbindungsbereiche zur Abdichtung (4) zwischen anliegenden Membranplatten (1) respektive zwischen Membranplatten und Abstandshaltern (9a) bilden, und zweite Bereiche der Umrandung Verbindungsbereiche (5) zur Verbindung mit einen Permeatsammelkanal (11) bilden.

6. Membranplatte (1) nach Anspruch 5, wobei die ersten und zweiten Bereiche der Umrandung (4,5) gegenüber einem übrigen Bereich der ersten Längskante (6a) erhaben sind.

7. Membranplatte (1) nach einem der Ansprüche 1 bis 6, wobei ein Anschlusselement (2) einen vergleichsweise kleinen Bereich einer Kante (6), durch welche das Anschlusselement (2) führt, beansprucht.

8. Filtereinheit (10), insbesondere für ein Wasserfilter einer Wasseraufbereitungsoder Abwasserreinigungsanlage, **dadurch gekennzeichnet, dass** sie mehrere fest verbundene Membranplatten gemäss einem der Ansprüche 1 bis 7 aufweist.

9. Filtereinheit (10) nach Anspruch 8, in welcher mindestens zwei Membranplatten (1) parallel zueinander angeordnet sind und zumindest in Bereichen zwischen den Anschlusselementen (2) der mindestens zwei Membranplatten (1) eine flüssigkeitsdichte Verbindung besteht.

10. Filtereinheit (10) nach Anspruch 9, in welcher die Membranplatten (1) aus thermoplastischen Material gefertigt sind und die flüssigkeitsdichte Verbindung eine Schweissverbindung ist.

11. Filtereinheit (10) nach Anspruch 9 oder 10, in welcher ein Permeatsammelkanal (11) die Anschlusselemente (2) der mindestens zwei Membranplatten (1) flüssigkeitsdicht umschliesst.

12. Filtereinheit (10) nach Anspruch 11, wobei der Permeatsammelkanal (11) ein an zwei Enden abgeschlossenes Hohlprofil ist und einen Permeatabzug (13) zur Ableitung von Permeat aufweist.

13. Filtereinheit (10) nach einem der Ansprüche 8 bis 12, wobei mindestens ein Abstandshalter (9a) zwischen einer ersten und einer zweiten Membranplatte (1) angeordnet ist und der Bereich zwischen den Anschlusselementen (2) der mindestens zwei Membranplatten (1) den ersten Abstandshalter (9a) und eine flüssigkeitsdichte Verbindung zwischen der ersten Membranplatte (1) und dem ersten Abstandshalter (9a) und eine flüssigkeitsdichte Verbindung zwischen dem ersten Abstandshalter (9a) und der zweiten Membranplatte (1) umfasst.

14. Filtereinheit (10) nach einem der Ansprüche 8 bis 13, wobei die mindestens zwei Membranplatten (1) und optionale Abstandshalter (9a,9b) an einer Kante (6a,6b) korrespondierend angeordnete Erhebungen (14) zur Bildung mindestens einer Schweissraupe zum Verschweissen der mindestens zwei Membranplatten (1) aufweisen.

15. Verfahren zur Herstellung einer Filtereinheit gemäss einem der Ansprüche 8 bis 14, aufweisend die folgenden Schritte:
- Aneinanderlegen von mindestens zwei mit Filtermembranen (7) versehenen Membranplatten (1) gemäss einem der Ansprüche 1 bis 7, wobei optional Abstandshalter (9a,9b) zwischen die Membranplatten (1) gelegt werden;
- Verschweissen von zwischen den Anschlusselementen (2) der Membranplatten (1) gelegenen Schweissbereichen zur Abdichtung (4).

16. Verfahren zur Herstellung einer Filtereinheit gemäss Anspruch 15, mit dem folgenden weiteren Schritt:
- Verschweissen eines eine Gesamtheit aller Anschlusselemente (2) umschliessenden Verbindungsbereichs (5) mit einer Schweisskante des Permeatsammelkanals (12).

17. Verfahren zur Herstellung einer Filtereinheit gemäss Anspruch 16, wobei vor dem Verschweissen mit einer Schweisskante des Permeatsammelkanals (12) der die Gesamtheit der Anschlusselemente (2) umschliessende Verbindungsbereich (5) durch Andrücken eines Druckstempels verschweisst wird.

18. Verfahren zur Herstellung einer Filtereinheit gemäss einem der Ansprüche 15 bis 17 wobei die aneinandergelegten Membranplatten (1) und optional die Abstandshalter (9a,9b) durch Verschweissen an weiteren Stellen (14) miteinander verbunden werden.

19. Verfahren zur Herstellung einer Filtereinheit gemäss Anspruch 18, wobei die weiteren Stellen (14) durch Erhitzen und Andrücken eines langgestreckten Formstempels verschweisst werden.
